# EUROPEAN PATENT APPLICATION

(11) **EP 2 348 464 A2**
(43) Date of publication of application: **27.07.2011**
(21) Application number: 10157736.9
(22) Date of filing: 25.03.2010
(51) Int. Cl.: G06Q 10/00

(54) **Content management systems and methods**

(30) Priority: 18.12.2009 US 642594
(71) Applicant: Omacro, Inc., Huntington Beach CA 90630 (US)
(72) Inventor: Rice, David, Huntington Beach CA 90630 (US)
(74) Representative: HOFFMANN EITLE

(57) **Abstract**

Systems and methods for content management are provided. The systems and methods may include a dynamically scalable computing resource configured to increase or decrease computing capacity. Dynamically scalable computing resources can include processors, memory coupled to the processor for storing instructions, and other computing resources. The memory can store instructions and data. The instructions may cause the processor to process data to enable multiple suppliers to select multiple specific resellers of their products, process data to control permissions that allow the specific retailers access to product data, process data to allow an agent of the retailer access to supplier data, and cause the processor to transmit a notification based on a change in a data element.

## Description

### FIELD

The disclosed systems and methods for social networking and content management and more particularly, to such systems in a dynamically scalable environment.

### BACKGROUND

A dynamically scalable computer system may allow users to increase or decrease the computer processing power used based on the current processing needs of a system. Some dynamically scalable computing systems may be virtual or internet-based. One example of internet-based dynamically salable computing is the so-called "cloud computing."

Cloud computing is a shift away from stand-alone, fully self-contained, computing systems. With cloud computing the users generally do not need knowledge, expertise or control of many of the details related to the technology infrastructure because that technology infrastructure is located "in the cloud" Generally this infrastructure can be provided as a service over the internet, which may allow the service to be dynamically scalable.

Users of such systems may avoid capital expenditures related to, for example, hardware and software because much of the processing, memory, and software required by the user are provided by one or more service providers over the internet. The user may be able to use a less expensive computing platform to access these services. For example, the user's computing platform may have less processing power, less memory, a smaller or no hard drive, e.g., some systems might use flash memory instead of a hard drive. Consumption of such services may be billed on a utility or subscription basis with little or no upfront cost. Additionally, such systems may have low barriers to entry, shared infrastructure and costs, low management overhead, and immediate access to a broad range of applications.

### SUMMARY

Various embodiments of the systems and methods described herein are-related to content management, social networking, or both. The systems and methods may include a dynamically scalable computing resource configured to increase or decrease computing capacity, The dynamically scalable computing resources can include processors, memory, and other computing resources. Additionally, the memory may be coupled to the processor for storing instructions and data.

To this end, in an exemplary embodiment of the present invention, a content management system comprising: a dynamically scalable computing resource configured to increase or decrease computing capacity, the dynamically scalable computing resource including: a processor, and a memory coupled to the processor storing instructions, wherein the memory stores instructions causing the processor to: process data to enable multiple suppliers to select multiple specific resellers of their products, process data to control permissions that allow the specific retailers access to product data, process data to allow an agent of the retailer access to supplier data, and cause the processor to transmit a notification based on a change in a data element.

In an exemplary embodiment, the content management system wherein the dynamically scalable computing resource is a virtual resource available over the internet.

In an exemplary embodiment, wherein at least some of the computing resources are provided on a server that includes the processor and the memory.

In an exemplary embodiment, wherein the computing resources are increased by increasing the number of servers that provide the computing resources.

In an exemplary embodiment, wherein the computing resources are decreased by decreasing the number of servers that provide the computing resources.

In an exemplary embodiment, wherein the computing resources are increased and decreased by increasing and decreasing the resources consumed by the system on a server.

In an exemplary embodiment, wherein the computing resources are increased by increasing the number of processors.

In an exemplary embodiment, wherein the computing resources are increased by increasing the amount of memory.

In an exemplary embodiment, wherein the computing resources are increased by using a faster processor.

In an exemplary embodiment, wherein the product data comprises: pricing, packaging, shipping details, product specifications, product description, recall information, marketing material, product images, product training videos, or customized attributes.

In an exemplary embodiment, wherein the change is the data element includes a change in pricing, packaging, shipping details, product specifications, product description, recall information, marketing material, product images, product training videos, or customized attributes.

In an exemplary embodiment, wherein data updates occur in real time.

In an exemplary embodiment, further including instructions that cause the system to bifurcate resellers.

In an exemplary embodiment, wherein one group of retailers has access to a different set of data than another group of retailers.

In an exemplary embodiment, wherein the different sets of data include different price lists.

In an exemplary embodiment, wherein the system further comprises instructions that cause the processor to send and receive messages to form a social networking system.

In an exemplary embodiment, wherein users can input industry contact information for data related to third party representative and product service centers.

In an exemplary embodiment, wherein each user of the system can customize the data presentation provided to them.

In an exemplary embodiment, wherein access by the general public is restricted.

In an exemplary embodiment, further comprising instructions to process a request to join from a retailer.

In an exemplary embodiments, the dynamically scalable computing resource is a virtual resource available over the internet. For example, in some systems at least some of the computing resources may be provided by a server that includes the processor and the memory. In such a system, the computing resources can be increased by increasing the number of servers that provide the computing resources and decreased by decreasing the number of servers that provide the computing resources. The amount of resources on one or more processors may also be increased or decreased based on the needs of the system.

In an exemplary embodiments, the computing resources are increased by increasing the number of processors used or decreased by decreasin.g the number of processors used. The amount of memory used may also be increased or decreased based on the needs of the system. The computing resources may also be increased or decreased based on the selection of processors. For example, some systems may dynamically select faster or slower processor based on the needs of the system. The terms "faster processor" and "slower processor" are intended to generally convey the instruction processing capabilities of the processors. It will be understood by those of skill in the art that different processors may have different capabilities with respect to different types of computing. Accordingly, one processor may be "faster" than another for some instructions and "slower" for other instructions. Accordingly, the terms "faster processor," and "slower processor" may, in some embodiments, be based on the specific instructions performed by the system.

Some embodiments comprise instructions that may cause the processor to process data to enable multiple suppliers to select multiple specific resellers of their products. Various instructions can also cause the processor to process data to control permissions that allow the specific retailers access to product data, process data to allow an agent of the retailer access to supplier data, and cause the processor to transmit a notification based on a change in a data element.

In an exemplary embodiments, the content management system may include product data such as: pricing, packaging, shipping details, product specifications, product description, recall information, marketing material, product images, product training videos, or customized attributes. Additionally, a change in the data element can include a change in these attributes.

In an exemplary embodiments, data updates occur in real time, allowing users nearly immediate access to information related to changes. For example, changes to pricing, packaging, shipping details, product specifications, product description, recall information, marketing material, product images, product training videos, or customize attributes may be tracked by the users. It will be understood by those skilled in the art that "real time" allows for deals related to processing, data transmission, etc.

In an exemplary embodiments, resellers may be bifurcated into groups or subgroups. This can allow different sets of data to be provided to different resellers. For example, different sets of resellers might have access to different price lists. It will be understood that, for the purposes of this application, bifurcation includes breaking into more than two groups.

In an exemplary embodiments, the system further comprises instructions that cause the processor to send and receive messages to form a social networking system. Such a system might provide an industry-wide social networking system. For example, the content management system may allow users to input industry contact information for data related to third party representative and product service centers.

Additionally, in an exemplary embodiments, each user of the system can customize the data presentation provided to them. This allows each user to access data in a way that is useful or meaningful to them.

While these systems do not generally allow access by the general public, the system may include instructions to cause the processor to process a request to join from a retailer.

Further features and advantages of the presently disclosed method and apparatus, as well as the structure and operation of various embodiments of the presently disclosed method and apparatus, are described in detail below with reference to the accompanying drawings.

### BRIEF DESCRIPTION OF THE DRAWINGS

The disclosed method and apparatus is described in detail with reference to the following figures. The drawings are provided for purposes of illustration only and merely depict typical or example embodiments of the disclosed method and apparatus. These drawings are provided to facilitate the reader's understanding of the disclosed method and apparatus and are not to be considered as limitations of the breadth, scope, or applicability of the claimed invention. The appended claims should be reviewed to determine the breadth, scope and applicability of the claimed invention. It should be noted that for clarity and ease of illustration, these drawings are not necessarily made to scale.
FIG. 1 is a block diagram illustrating a simplified example content management system in accordance with one embodiment of the systems and methods described herein.
FIG. 2 is a flow diagram illustrating an example method for content management.
FIG. 3 is a block diagram illustrating an example content management system in accordance with one embodiment of the systems and methods described herein.

It should be understood that the disclosed method and apparatus might be practiced with modification and alteration.

### DETAILED DESCRIPTION

Various embodiments of the systems and methods described herein are related to content management, social networking, or both. The systems and methods may include a dynamically scalable computing resource configured to increase or decrease computing capacity. The dynamically scalable computing resources can include processors, memory, and other computing resources. Additionally, the memory may be coupled to the processor for storing instructions and data, While various examples are given with respect to content management systems, it will be understood that the systems and methods described herein can also be configured to form a social networking system.

These systems and methods may provide a single integrated social networking and/or content management system. In various embodiments, this system can be run using a dynamically scalable computing infrastructure such as cloud computing.

Some embodiments provide a single system that may enable multiple suppliers to select specific multiple resellers to view standard or customized product data. The resellers may set specific user permissions to allow access to the supply data for their agents. Data in these systems may be provided in real-time and the resellers can subscribe to receive notifications of specific data elements. Generally the system is closed to the public.

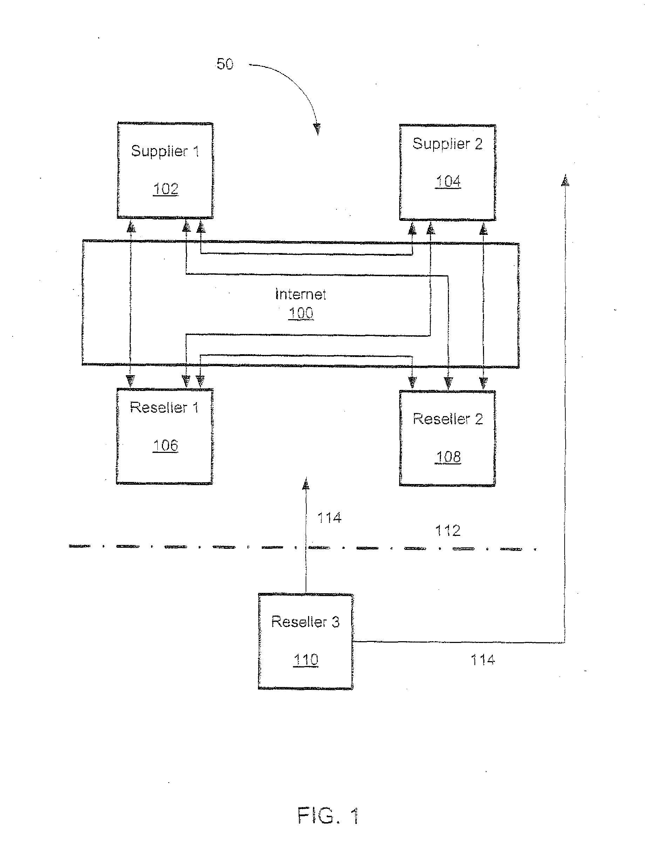

FIG. 1 is a block diagram illustrating a simplified example content management system 50 in accordance with one embodiment of the systems and methods described herein. Various components of the content management system 50 may be connected using a dynamically scalable computer system. As one example, the dynamically scalable computing systems can be be virtual or internet-based 100, as illustrated in FIG. 1.

The dynamically scalable computer system may allow users to increase or decrease the computer processing power used based on the current processing needs of the system 50. One example of internet-based 100 dynamically scalable computing is "cloud computing," which may be used in various embodiments of the systems and methods described herein.

In the example content management system 50 Supplier 1, 102; Supplier 2, 104; Reseller 1, 106; and Reseller 2, 108 are connected over the internet 100 using a dynamically scalable computer system. In other words, using one or more computers, servers, PDAs, Smart Devices, storage devices, or other processing components can be connected together using the internet 100. These devices are not illustrated in FIG. 1. Rather the processing components are "in the cloud" and generally not specifically known or accessible by the user. (The user can access "the cloud" but generally does not know specific information regarding the actual processing components within the cloud.)

Reseller 3, 110 generally does not have access to the content management system 50, as indicated by line 112. In some embodiments, however, a resellers, such as reseller 110 can apply for access to the system 50. Users of the system 50 confirm access to the system 50, deny access to the system 50, or ignore the request. These requests may come through the system 50 as indicated by line 114 or may be provided by some other means as indicated by line 116, which goes around line 112, which indicates no access. For example, various systems may allow a user to apply for access in person, over the phone, by mail, etc. This bypasses the system 50.

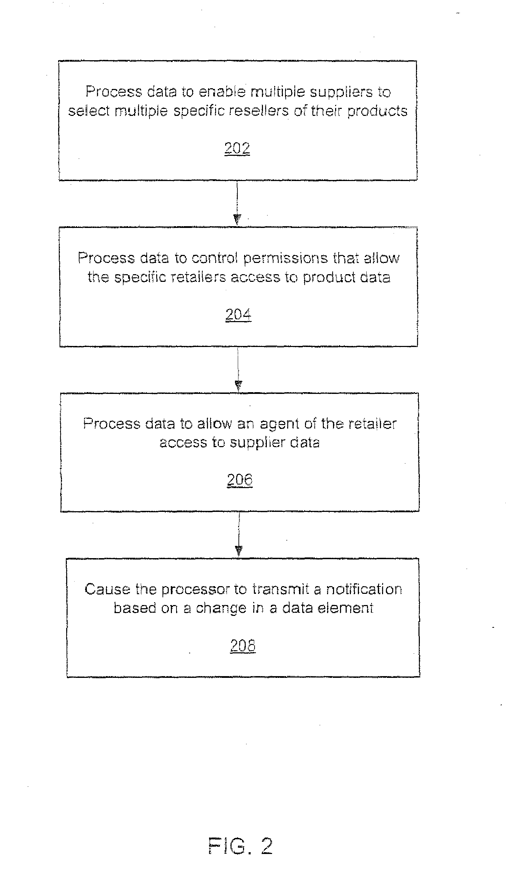

FIG. 2 is a flow diagram illustrating, an example method for content management. In certain embodiments the method illustrated in FIG. 2 may be implemented using virtual dynamically scalable computing, such as, for example, cloud computing.

In step 202 of the illustrated embodiment, data can be processed to enable multiple suppliers to select specific multiple resellers for their products. These resellers may be selected by the supplier based on geographic areas, reseller size, reseller reputation, prior business dealings, or other criterion. It will be understood that, in some embodiments, a single supplier might be selected.

In step 204 of the illustrated embodiment, data can be processed to control permissions that allow the specified retailers access to product data such as: pricing, packaging, shipping details, product specifications, product description, recall information, marketing material, product images, product training videos, or customized attributes. With access to product data retailers can make various decisions related to their business, such as how much inventory to purchase, which inventory to purchase, prices to charge for the items being offered for sale, etc.

In step 206 of the illustrated embodiment, data can be processed to allow an agent of a retailer to have access to the supplier data, In some embodiments, this access might be limited, e.g., only pricing, shipping, and marketing material, for example.

In step 208 of the illustrated embodiment, a notification is sent. In an embodiment that runs using virtual dynamic scalable computing within a processor, such as a processor in a server on the internee can cause the notification to be sent. The notification may be sent based on, for example, a change in a data element.

Changes can include increases or decreases in pricing, changes in packaging for a product or groups of products, shipping details such as shipper used, shipping costs, shipping delays, etc., changes to a product specification, such as changes in size, weight, materials, color, tolerances, electrical requirements, etc., changes to a products description, which may be based on changes to a products specification, changes in recall information, such as the introduction of a recall; changes in marketing material, new product images, the existence of new product training videos, the obsolescence of previous training videos, or customized attributes. The customizable attributes can be a field that is a service provide or user programmable to store any miscellaneous product or other data that a user, such as a retailer or supplier might like to add to the system.

Some embodiments provide a real-time solution for resellers to locate price lists, product content, documentation, images, and product training materials for their sales and customer service support personnel. This data might also be provided to websites, catalogs, customer price lists, and other uses. Additionally, the systems and methods described herein might provide a solution for suppliers to manage their products, pricing, customer relationships, and product launches, In some examples, the system may allow the supplier to reach a specific customer in real time, such as a customer that has a specific need that might be solved with the supplier's product.

As discussed above, the systems and methods described herein may provide social networking capability, For example, such a system may provide a business-to-business social networking capability that allows an entire supply chain to stay in communication. This communication may be occasionally, regularly, constant, variable, etc., depending on the needs of the group. In some embodiments, the various users may be responsible for maintaining their own user accounts. This may allow for an up-to-date industry-wide contact database. This will depend on how well the individual users maintain their portion of the data, however.

In some embodiments, the system may provide updates to all users when one or a small number of users update the same or a similar account. For example, an update to an account for IBM might trigger an update to an account for International Business Machine or the system might consolidate multiple such accounts into a single or fewer accounts.

The display provided to each user may be customizable and can include wide controls (large control areas that take up a large amount of a computer screen), large "dashboards" (on screen) to allow for easy administration. These controls may provide for easy administration of company relationships, company permissions, user relationships, and user permissions.

Because of the open architecture of the system, users can display data using, for example, a customizable home page. Content available, news, and product notifications may also be customized.

Various embodiments of the systems and methods described herein may provide full import, export, and API access to most data, e.g., product information, user information, etc.

In some embodiments only approved retailers are able to access the suppliers' content area. Accordingly, retailers may be able to request access either through the system or by other means.

The system may allow for a single source for collection of all supplier's collateral materials, such as up-to-date price lists, images, product descriptions, precuts and category training information, etc. The system may also provide real-time updates on product news, including new products, price changes, closeouts, recall notices, rebates, etc. Additionally, various embodiments may provide a uniformed format for the data provided from multiply suppliers.

Various embodiments allow for management of extremely large numbers of products, including stylized products. The products may be added or modified singularly or in bulk, bulk uploaded to Excel, CSV, or other software program format, or by API. Additionally, elements of the data can include custom pricing levels by specific customer or customer group, end-user rebate information, user manuals, training material, including videos intended for specific customer groups, general videos, etc. The data may also include product content such as web and print images, text, rich media, custom product attributes, and other product, supplier, or retailer data, for example.

Some embodiments allow a retailer to manage customer relationships, including which customers see which information, such as tailored price lists for specific customers. Groups of customers can be processed together, predetermined or custom types of customers may be stored, and suppliers might recruit other customers as well as cross-reference using internal (e.g., system) identification numbers. The system may also manage third-party representative relationships and allow for suppliers to have multiple groups that may be marketed uniquely and, have different content such as price lists, etc.

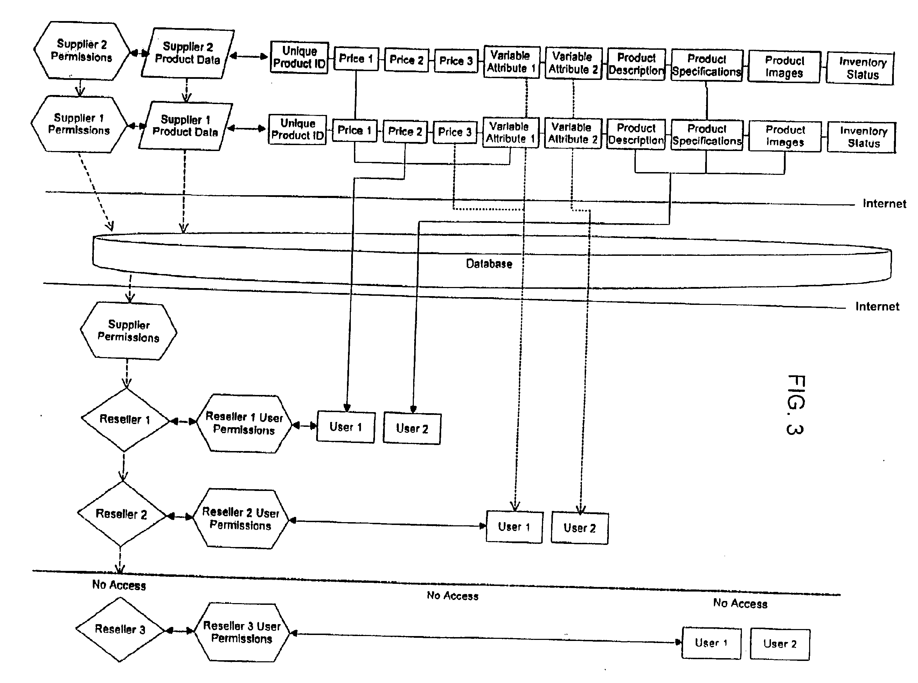

FIG. 3 is a block diagram illustrating an example content management system in accordance with one embodiment of the systems and methods described herein. The figure provides additional details related to an example embodiment of a content management system.

As illustrated in FIG. 3 permission information 300 and product data 302 from one or more suppliers may be provided to a database 304. The permission information 300 can be consolidated at 306 such that resellers 308 can access database 304 and have access to various information stored in database 304. Additionally, resellers 308 may provide permissions 310 to separate users 312, thus allowing the users to access database 304. For example, a reseller may want an agent, such as a sales representative to have access to some or all of the information stored in database 304. Accordingly, permissions 310 may allow for such access.

Ultimately, the level of access provided to an entity such as an individual supplier, individual reseller, agent, or other user may be determined by a specific suppler who might own that information, a group of suppliers, one or more resellers, or other various combinations of entities that might or might not have access to the system.

In some cases access may be denied to a reseller 314, either temporarily or permanently. For example, reseller 314 may be able to apply for access.

Additionally, as illustrated in FIG. 3, different product data 316, 318, 320, 322 may be routed to different users. This can allow for different marketing strategies to be used with different resellers because one reseller or user might not have access to information that another reseller or user has. For example, in the illustrated embodiment, user 1 of reseller 1 has access price 2 at 316 but not price 1 or price 3, while user 1 of resellers 2 has to access price at 320. Note, however, that in some cases a single user I may have access to different prices through different resellers. For example, user 1 may be a single sales representative with access to products through both reseller 1 and reseller 2. This single user 1 may get different pricing from each reseller with reseller 1 providing price 2 and reseller 2 providing price 3. It will be understood that many different permutations and combinations are possible.

Additionally, the system may utilize the internet 324 to provide processing capability and storage for database 304.

While various embodiments of the method and apparatus have been described above, it should be understood that they have been presented by way of example only, and not of limitation. Likewise, the various diagrams might depict an example of an architectural or other configuration for the disclosed method and apparatus, which is done to aid in understanding the features and functionality that might be included in the method and apparatus. The disclosed method and apparatus is not restricted to the illustrated example architectures or configurations, but the desired features might be implemented using a variety of alternative architectures and configurations. Indeed, it will be apparent to one of skill in the art how alternative functional, logical or physical partitioning and configurations might be implemented to implement the desired features of the disclosed method and apparatus. Also, a multitude of different constituent module names other than those depicted herein might be applied to the various partitions. Additionally, with regard to flow diagrams, operational descriptions and method claims, the order in which the steps are presented herein, shall not mandate that various embodiments be implemented to perform the recited functionality in the same order unless the context dictates otherwise.

Although the method and apparatus is described above in terms of various exemplary embodiments and implementations, it should be understood that the various features, aspects and functionality described in one or more of the individual embodiments are not limited is their applicability to the particular embodiment with which they are described, but instead might be applied, alone or in various combinations, to one or more of the other embodiments of the disclosed method and apparatus, whether or not such embodiments are described and whether or not such features are presented as being a part of a described embodiment. Thus the breadth and scope of the claimed invention should not be limited by any of the above-described embodiments.

Terms and phrases used in this document, and variations thereof, unless otherwise expressly stated, should be construed as open-ended as opposed to limiting. As examples of the foregoing: the term "including" should be read as meaning "including, without limitation" or the like, the term "example" is used to provide exemplary instances of the item in discussion, not as exhaustive or limiting list thereof, the terms "a" or "an" should be read as meaning "at least one," "one or more," or the like, and adjectives such as "conventional," "traditional," "normal," "standard," "known" and terns of similar meaning should not be construed as limiting the item described to a given time period or to an item available as of a given time, but instead should be read to encompass conventional, traditional, normal, or standard technologies that might be available or known now or at any time in the future. Likewise, where this document refers to technologies that would be apparent or known to one of ordinary skill in the art, such technologies encompass those apparent or known to the skilled artisan now or at any time in the future.

The presence of broadening words and phrases such as "one or more," "at least," "but not limited to" or other like phrases in some instances shall not be read to mean that the narrower case is intended or required in instances where such broadening phrases might be absent. The use of the term "module" does not imply that the components or functionality described or claimed as part of the module are all configured in a common package. Indeed, any or all of the various components of a module, whether control logic or other components, might be combined in a single package or separately maintained and might further be distributed across multiple locations.

Additionally, the various embodiments set forth herein are described in terms of exemplary block diagrams, flow charts and other illustrations. As will become apparent to one of ordinary skill in the art after reading this document, the illustrated embodiments and their various alternatives might be implemented without confinement to the illustrated examples. For example, block diagrams and their accompanying description should not be construed as mandating a particular architecture or configuration.

## Claims

1. A content management system comprising:
a dynamically scalable computing resource configured to increase or decrease computing capacity, the dynamically scalable computing resource including:
a processor, and
a memory coupled to the processor storing instructions, wherein the memory stores instructions causing the processor to:
a) process data to enable multiple suppliers to select multiple specific resellers of their products,
b) process data to control permissions that allow the specific retailers access to product data,
c) process data to allow an agent of the retailer access to supplier data, and
d) cause the processor to transmit a notification based on a change in a data element.

2. The content management system of claim 1, wherein the dynamically scalable computing resource is a virtual resource available over the internet.

3. The content management system of claim 2, wherein at least some of the computing resources are provided on a server that includes the processor and the memory.

4. The content management system of claim 2, wherein the computing resources are increased by increasing the number of servers that provide the computing resources, and/or
wherein the computing resources are decreased by decreasing the number of servers that provide the computing resources, and/or
wherein the computing resources are increased and decreased by increasing and decreasing the resources consumed by the system on a server.

5. The content management system of claim 1, wherein the computing resources are increased by increasing the number of processors, and/or
wherein the computing resources are increased by increasing the amount of memory, and/or
wherein the computing resources are increased by using a faster processor.

6. The content management system of claim 1, wherein the product data comprises:
pricing, packaging, shipping details, product specifications, product description, recall information, marketing material, product images, product training videos, or customized attributes.

7. The content management system of claim 1, wherein the change in the data element includes a change in pricing, packaging, shipping details, product specifications, product description, recall information, marketing material, product images, product training videos, or customized attributes.

8. The content management system of claim 1, wherein data updates occur in real time.

9. The content management system of claim 1, further including instructions that cause the system to bifurcate resellers.

10. The content management system of claim9, wherein one group of retailers has access to a different set of data than another group of retailers.

11. The content management system of claim 1, wherein the different sets of data include different price lists.

12. The content management system of claim 1, wherein the system further comprises instructions that cause the processor to send and receive messages to form a social networking system, and/or
wherein users can input industry contact information for data related to third party representative and product service centers.

13. The content management system of claim 1, wherein each user of the system can customize the data presentation provided to them.

14. The content management system of claim 1, wherein access by the general public is restricted.

15. The content management system of claim 1, further comprising instructions to process a request to join from a retailer.
